# EUROPÄISCHE PATENTSCHRIFT

(11) **EP 0 552 674 B1**
(45) Veröffentlichungstag und Bekanntmachung des Hinweises auf die Patenterteilung: **13.12.1995**
(21) Anmeldenummer: 93100537.5
(22) Anmeldetag: 15.01.1993
(51) Int. Cl.: F16J 15/02, F16L 15/04

(54) **Abdichtvorrichtung mit Dichtring**
Sealing device with sealing ring
Dispositif d'étanchéification avec bague d'étanchéité

(30) Priorität: 22.01.1992 DE 4201626
(43) Veröffentlichungstag der Anmeldung: 28.07.1993
(73) Patentinhaber: Anton Hummel Verwaltungs-GmbH, D-79183 Waldkirch (DE)
(72) Erfinder: Gehring, Peter, W-7809 Simonswald (DE)
(74) Vertreter: Patent- und Rechtsanwaltssozietät, Schmitt, Maucher & Börjes

(56) Entgegenhaltungen:
- EP-A- 0 022 293
- EP-A- 0 061 752
- EP-A- 0 117 381
- DE-C- 3 406 350
- DE-U- 7 230 680
- FR-A- 1 412 944
- US-A- 1 368 196

## Beschreibung

Die Erfindung betrifft eine Abdichtvorrichtung mit einem axial beaufschlagten, als Profilring ausgebildeten Dichtring aus nachgiebigem Werkstoff zwischen zwei mittels Gewinde verschraubbaren abzudichtenden Teilen gemäß dem Oberbegriff des Patentanspruches 1.

Eine derartige Abdichtvorrichtung ist aus der DE-34 06 350 C2 und aus der EP-0 152 617 B1 bekannt. Die Abquetsch- oder Schneidkante dient dabei zum Abscheren von durch das Verschrauben der Teile aus der Dichtkammer verdrängtem überschüssigem Dichtungswerkstoff, so daß bei Anlage dieser Abquetsch- oder Schneidkante an dem anderen Teil die Dichtkammer in erwähnter Weise abgeschlossen ist. Dabei ist auch schon vorgesehen, eine auch radiale Erweiterung der Dichtkammer im Bereich des Gewindeauslaufes anzuordnen.

Diese bekannte Abdichtvorrichtung hat den erheblichen Vorteil, daß sowohl stark angefaste als auch gar nicht angefaste oder etwa rechtwinklige Kanten eines abzudichtenden Teiles an ein und demselben Dichtring zur Anlage gebracht werden können und dennoch über lange Jahre die Dichtigkeit erhaltenbleibt und die Gefahr eines Kriechens des Dichtungswerkstoffes aus dem Dichtungsbereich und eine Verminderung der Dichtwirkung vermieden werden. Das Abschließen der Dichtkammer durch die an dem anderen Teil anstehende Abquetsch- oder Schneidkante verhindert ein Wegkriechen, und das bestmögliche Ausfüllen der Dichtkammer mit Dichtungswerkstoff unter Anpreßdruck sorgt für eine gute Dichtigkeit auch über lange Jahre.

Ist gar keine Anfasung vorhanden, kann entsprechend viel überschüssiger Dichtungswerkstoff beim Verschließen der Dichtkammer nach außen verdrängt und mittels der Abquetsch- oder Schneidkante abgequetscht oder abgeschert werden; ist die Gegenkante angefast, ergibt sich bei verschraubten Teilen eine entsprechend größere Dichtkammer, so daß auch entsprechend weniger bis gar kein Dichtungswerkstoff ausgequetscht und abgeschert werden muß. Somit kann der Hersteller des die Dichtkammer und den Dichtring aufweisenden Teiles dieses unabhängig davon immer gleich gestalten, welches andere Teil der Abnehmer an diesem Teil anzuschrauben gedenkt.

Es hat sich gezeigt, daß unter bestimmten Umständen beim Verschrauben der durch die Dichtung in der Dichtkammer bewirkte Gegendruck durch den Widerstand beim Abquetschen oder Abscheren derart verstärkt werden kann, daß er bei zunehmender Verschraubung so ansteigt, daß das erforderliche Anzugsdrehmoment nicht oder kaum mehr aufgebracht werden kann. Dies gilt vor allem dann, wenn ein Benutzer ein nicht oder nur wenig angefastes anderes Teil verwendet und abdichtet. Es besteht dann die Gefahr, daß der Verschraubungsvorgang schon beendet wird, bevor das Abscheren oder Abquetschen beendet, also die Dichtkammer ganz geschlossen ist, oder daß das Gewinde überlastet wird.

Eine Abdichtvorrichtung abgewandelter Gattung ist aus DE-U-7 230 680 bekannt. In diesem Falle ergeben sich in radialer Richtung außerhalb der Dichtkammer aneinanderliegende Flächen der beiden zu verbindenden Teile, so daß eine Abquetsch- oder Schneidkante nicht gebildet ist. Würde an dem radial außenliegenden Rand der Dichtkammer Werkstoff austreten, würde dieser nicht abgequetscht oder gar abgeschnitten, sondern zwischen die planen Flächen der zu verbindenden Teile eintreten und deren weitere Annäherung auch bei erheblich vergrößertem Drehmoment verhindert.

Die gesamte Dichtkammer, die sich teils in radialer, teils in axialer Richtung erstreckt, hat dabei zwischen zwei Bereichen einen ringförmig umlaufenden Vorsprung der dazu führt, daß der mit Abstand zum Gewindeauslauf angeordnete, sich in radialer Richtung erstreckende Bereich der Dichtkammer eine Hinterdrehung hat, die den Dichtring vor seiner Verformung in axialer Richtung festlegt. Es ist somit insgesamt ein im Schnitt gesehen etwa E-förmiger Hohlraum geschaffen, der in radialer Richtung in Gebrauchsstellung von der Dichtung vollständig ausgefüllt wird, während ein Teil der Dichtung dann auch etwas in axialer Richtung verdrängt werden kann.

Ist jedoch beim Zusammendrücken des Dichtringes durch den Widerstand an der Hinterdrehung ein Teil des Dichtungswerkstoffes in radialer Richtung nach außen ausgetreten, wird eine endgültige Annäherung der zu verschraubenden Teile durch diesen Teil des Dichtungswerkstoffes verhindert, der nicht abgeschert oder abgeschnitten werden kann.

Der Erfindung liegt deshalb die Aufgabe zugrunde, eine Abdichtvorrichtung der eingangs erwähnten Art so auszugestalten und zu verbessern, daß die Vorteile einer gefüllten Dichtkammer im Zusammenwirken mit einer Abquetsch- oder Schneidkante und die Möglichkeit, ganz unterschiedlich stark oder gar nicht angefaste andere Teile abdichten zu können, erhalten bleiben, dennoch aber während des Verschraubens die Gegenkraft nicht zu stark anwächst.

Diese Aufgabe wird mit Hilfe der Merkmale und Mittel des Patentanspruches 1 gelöst. Die C- oder J-Form des Querschnittes der Dichtkammer ergibt eine erwünschte radiale und axiale Erweitergung dieser Dichtkammer ohne hinderliche Hinterdrehung. Dabei wird durch die axiale Erweiterung der Dichtkammer mit einem spaltartigen Zutritt zu dieser Erweiterung, nämlich dem Durchtrittsspalt, erreicht, daß bei einer Zunahme des Druckes innerhalb des Dichtungswerkstoffes während des Verschraubens über den "Drosselwiderstand" dieses Durchtrittsspaltes hinaus der Dichtungswerkstoff ausweichen kann, so daß der sich ohne diese Ausweichmöglichkeit aufbauende zu starke Druck vermieden bzw. auf ein erträgliches Maß begrenzt wird.

(Es folgt die ursprüngliche Beschreibung ab S.Eine Abdichtvorrichtung abgewandelter Gattung ist aus DE-U-7 230 680 bekannt. In diesem Falle ergeben sich in radialer Richtung außerhalb der Dichtkammer aneinanderliegende Flächen der beiden zu verbindenden Teile, so daß eine Abquetsch- oder Schneidkante nicht gebildet ist. Würde an dem radial außenliegenden Rand der Dichtkammer Werkstoff austreten, würde dieser nicht abgequetscht oder gar abgeschnitten, sondern zwischen die planen Flächen der zu verbindenden Teile eintreten und deren weitere Annäherung auch bei erheblich vergrößertem Drehmoment verhindert.

Die gesamte Dichtkammer, die sich teils in radialer, teils in axialer Richtung erstreckt, hat dabei zwischen zwei Bereichen einen ringförmig umlaufenden Vorsprung der dazu führt, daß der mit Abstand zum Gewindeauslauf angeordnete, sich in radialer Richtung erstreckende Bereich der Dichtkammer eine Hinterdrehung hat, die den Dichtring vor seiner Verformung in axialer Richtung festlegt. Es ist somit insgesamt ein im Schnitt gesehen etwa E-förmiger Hohlraum geschaffen, der in radialer Richtung in Gebrauchsstellung von der Dichtung vollständig ausgefüllt wird, während ein Teil der Dichtung dann auch etwas in axialer Richtung verdrängt werden kann.

Ist jedoch beim Zusammendrücken des Dichtringes durch den Widerstand an der Hinterdrehung ein Teil des Dichtungswerkstoffes in radialer Richtung nach außen ausgetreten, wird eine endgültige Annäherung der zu verschraubenden Teile durch diesen Teil des Dichtungswerkstoffes verhindert, der nicht abgeschert oder abgeschnitten werden kann.

Der Erfindung liegt deshalb die Aufgabe zugrunde, eine Abdichtvorrichtung der eingangs erwähnten Art so auszugestalten und zu verbessern, daß die Vorteile einer gefüllten Dichtkammer im Zusammenwirken mit einer Abquetsch- oder Schneidkante und die Möglichkeit, ganz unterschiedlich stark oder gar nicht angefaste andere Teile abdichten zu können, erhalten bleiben, dennoch aber während des Verschraubens die Gegenkraft nicht zu stark anwächst.

Diese Aufgabe wird mit Hilfe der Merkmale und Mittel des Patentanspruches 1 gelöst. Die C- oder J-Form des Querschnittes der Dichtkammer ergibt eine erwünschte radiale und axiale Erweitergung dieser Dichtkammer ohne hinderliche Hinterdrehung. Dabei wird durch die axiale Erweiterung der Dichtkammer mit einem spaltartigen Zutritt zu dieser Erweiterung, nämlich dem Durchtrittsspalt, erreicht, daß bei einer Zunahme des Druckes innerhalb des Dichtungswerkstoffes während des Verschraubens über den "Drosselwiderstand" dieses Durchtrittsspaltes hinaus der Dichtungswerkstoff ausweichen kann, so daß der sich ohne diese Ausweichmöglichkeit aufbauende zu starke Druck vermieden bzw. auf ein erträgliches Maß begrenzt wird.

Da der Durchtrittsspalt in der definierten Weise so bemessen ist, daß der Dichtungswerkstoff erst unter einem erhöhten Druck ausweicht, kann dennoch ein Abquetschen oder Abscheren aufgrund der entsprechenden Kraft bewirkt werden, wenn bei der Verschraubung überschüssiger Dichtungswerkstoff aus der Dichtkammer radial nach außen ausgetreten ist.

Durch Versuche kann festgestellt werden, ob die Abmessung des Durchtrittsspaltes im Verhältnis zur Menge oder zum Volumen des Dichtungswerkstoffes dazu führt, daß die Dichtkammer selbst zunächst völlig ausgefüllt und auch ein Teil des Dichtungswerkstoffes nach außen gequetscht und dort abgeschert oder abgequetscht wird. Der Durchtrittsspalt hat also gewissermaßen die Funktion eines Überdruckventiles, das heißt, Dichtungsmasse oder Dichtungswerkstoff wird durch diesen Durchtrittsspalt gedrückt, wenn der Widerstand gegen ein Abquetschen oder Abscheren oder in der Dichtkammer zu hoch würde.

Die Erfindung hat also nicht zum Ziel, die Dichtkammer um den Durchtrittsspalt und einen sich daran anschließenden Zwischenraum - dessen Weite der des Durchtrittsspaltes entsprechen oder diese übertreffen kann - zu vergößern, sondern es geht darum, eine optimal gefüllte Dichtkammer mit einem möglichst kleinen Drehmoment bei der Verschraubung sicher schließen zu können, obwohl die Dichtkammer bedingt durch die verschieden geformten Gewindeanfänge des anderen Teiles oder Gegenstückes sich in Form und Volumen sehr stark unterscheiden können. Die Verformung des Dichtringes kann aufgrund der erfindungsgemäßen Ausbildung trotz unterschiedlicher Anfasungen bzw. auch fehlender Anfasung am anderen Teil so gezielt erfolgen, daß die Dichtkammer bei einem stark oder zu stark angesenkten oder angefasten anderen Teil ganz oder annähernd ganz gefüllt ist und bei einem schwach oder gar nicht angesenkten anderen Teil sich der austretende Dichtungswerkstoff problemlos abquetschen oder abschneiden läßt und die Dichtkammer mit wenig Kraftaufwand geschlossen werden kann. Die dabei zweckmäßige Volumengröße oder Querschnittsabmessung des Dichtringes kann problemlos durch Berechnungen oder Versuche ermittelt werden, wobei es keine Rolle spielt, ob der Dichtring ein O-Ring oder ein sonstiger Profil- oder Dichtring ist.

Eine bevorzugte Volumengröße des Dichtringes wäre das Volumen der Dichtkammer, welches sich ergibt, wenn bei einem anderen Teil oder Gegenstück die Ansenkung oder Anfasung gleich oder größer als der Durchmesser der Schneid- oder Quetschkante ausgeführt wird und die sich bis zum Gewindeprofil bildende Dichtkammer von Dichtwerkstoff ganz oder annähernd ausgefüllt wird. Der Durchmesser der Schneid- oder Quetschkante kann dabei gleich oder annähernd gleich dem Außendurchmesser des abzudichtenden Teiles sein. Bei einer Verkleinerung der Dichtkammer durch eine schwächere Ansenkung kommt dann der überschüssige Dichtungswerkstoff über den Durchtrittsspalt auch nach innen und/oder wird nach außen verdrängt und abgequetscht oder abgeschert.

Zweckmäßig ist es dabei, wenn in verschraubter Position mit einem gering oder nicht angefasten anderen Teil oder Gegenstück die gesamte Dichtkammer und der Durchtrittsspalt sowie wenigstens ein Teil des in axialer Richtung hinter dem Durchtrittsspalt befindlichen Zwischenraumes oder Gewinderaumes mit Dichtungswerkstoff ausgefüllt sind. Es kann dann von einer langjähringen Lebensdauer dieser Abdichtung ausgegangen werden.

Der Querschnitt der Dichtkammer und des Dichtringes können derart aufeinander abgestimmt sein, daß bei starker oder zu großer Anfasung oder Ansenkung der Stirnseite des Innengewindes an dem anderen Teil die Dichtkammer zumindest weitgehend oder vollständig mit Dichtungswerkstoff ausgefüllt ist. Dadurch wird dann sichergestellt, daß eine solche Ausfüllung der Dichtkammer erst recht bei geringerer Anfasung erzielt wird. Fehlt die Anfasung oder ist sie sehr gering, kann der Dichtungswerkstoff entsprechend mehr ausweichen, als wenn eine große Anfasung vorhanden ist. Die Abmessung der Dichtkammer und des Zwischenraumes gestatten aufgrund der vorerwähnten Maßnahme auch bei fehlender oder geringer Anfasung, daß der Dichtungswerkstoff teilweise in den Zwischenraum ausweicht und so den Druck während des Abquetschens oder Abschneidens von nach außen verdrängtem Dichtungswerkstoff begrenzt.

Die radiale Höhe des Durchtrittsspaltes zwischen dem Anfang des Gewindeprofiles oder dem ersten Gewindegang und dem Boden der Dichtkammer kann einen Bruchteil der theoretischen Profilhöhe des Gewindes betragen. Andernfalls wäre die Spaltweite eventuell zu groß, so daß der Dichtungswerkstoff zu leicht und also bevorzugt durch diesen Durchtrittsspalt abfließen könnte, ohne den erwünschten Gegendruck für ein Ausquetschen und Abscheren von Dichtungswerkstoff an der Abquetsch- oder Schneidkante zu bewirken, wenn das Gesamtvolumen des Dichtungswerkstoffes aufgrund der geringen oder fehlenden Anfasung an dem anderen Teil auch nach außen ausweichen muß.

Die Differenz zwischen dem Kerndurchmesser des Innengewindes am anderen Teil oder Gegenstück und dem Bodendurchmesser der Dichtkammer kann dabei zumindest am Durchtrittsspalt wenigstens ein Sechstel, ein Fünftel oder mehr, zum Beispiel ein Viertel, bevorzugt ein Drittel, die Hälfte oder noch mehr, gegebenenfalls das Ein- oder Eineinhalbfache der Höhe des Gewindeprofiles betragen. Eine optimale Bemessung kann erforderlichenfalls unter Berücksichtigung der schon vorstehend beschriebenen Merkmale und Maßnahmen durch Versuche festgestellt werden.

Die axiale Erstreckung der Dichtkammer in Gewinderichtung kann von einer durch ihre Abquetsch- oder Schneidkante verlaufenden radialen oder Querschnittsebene aus wenigstens etwa einer Gewindesteigung entsprechen. Dadurch wird der als Ausweichraum und "Überdruckgefäß" dienende Zwischenraum genügend groß, um bei unterschiedlich stark angefasten Gewindeanfängen des anderen Teiles jeweils in der gewünschten Weise wirksam zu werden und mehr oder weniger Dichtungswerkstoff aufzunehmen, nachdem zunächst bevorzugt die Dichtkammer ausgefüllt und gegebenenfalls ein weiterer Teil des Dichtungswerkstoffes aus dieser an der Qbquetsch- und Schneidkante ausgepreßt und abgeschert wird. Dabei kann die gewünschte Verformung und Verdrängung von Dichtungswerkstoff dadurch beeinflußt werden, daß der Boden der Dichtkammer in axialer Richtung - insbesondere konisch - ansteigend oder abfallend verlaufen kann.

Die Abquetsch- oder Schneidkante, die Größe der Dichtkammer und die radiale Ausdehnung des Durchtrittsspaltes unterhalb des Gewindes des anderen Teiles können im Verhältnis zum Volumen der Dichtung so abgestimmt sein, daß beim Festziehen des abzudichtenden Teiles und dem daraus resultierenden Einschließen von Dichtungswerkstoff in der Dichtkammer die Zunahme des Druckes innerhalb des Dichtungswerkstoffes der durch das Verdrängen des Dichtungswerkstoffes durch den Durchtrittsspalt bewirkten Druckabnahme etwa gleich ist. Somit bleibt das Anzugsdrehmoment auch in der letzten Phase der Verschraubung und des Festziehens des Gewindes, in welcher außerdem überschüssiger Dichtungswerkstoff aus der Dichtkammer nach außen verdrängt und abgeschert werden kann, weitgehend unverändert, das heißt, ein unzumutbares Ansteigen dieses Drehmomentes wird verhindert. Dadurch wird erreicht, daß das Festziehen des Gewindes und vor allem das Abschließen der Dichtkammer nach außen problemlos und ohne zu großen oder gar unüberwindlichen Kraftaufwand beendet werden kann, ohne das Gewinde zu überlasten, wobei aber dennoch die erwünschte langwirkende Abdichtung durch den die Dichtkammer unter Druck ausfüllenden Dichtungswerkstoff erreicht wird.

Dabei ist es günstig, wenn die radiale Abmessung des Durchtrittsspaltes zwischen dem Boden der Dichtkammer und dem Kerndurchmesser des Gewindes am anderen Teil gleich oder geringer als die axiale Abmessung desjenigen Spaltes zwischen Abquetsch- oder Schneidkante und Gegenfläche oder Stirnseite ist, der an einem nicht oder wenig angefasten Teil beim Verschrauben bei Beginn des Aufwölbens und Ausquetschens eines Teiles des Dichtungswerkstoffes im Bereich der Abquetsch- oder Schneidkante zwischen beiden sich noch nicht berührenden Teilen besteht. Der in Umfangsrichtung etwa ringförmig verlaufende, eine axiale Breite aufweisende Spalt zwischen Abquetsch- oder Schneidkante und Gegenfläche verändert sich während des Anziehens des Gewindes und soll nach dem Anziehen durch das Verschließen der Dichtkammer verschwunden sein. In der Phase, in welcher das Aufwölben und Ausquetschen von Dichtungswerkstoff beginnt, soll nun die axiale Breite dieses Spaltes etwa der radialen Breite oder Höhe des Durchtrittsspalte entsprechen. Dadurch kann erreicht werden, daß der sich im Dichtungswerkstoff aufbauende Druck zu einem etwa gleichmäßigen Ausweichen des Dichtungswerkstoffes durch beide Spalte und außerdem dann zu einem Abscheren oder Abquetschen an der Außenseite führt.

Es kann aber auch zweckmäßig sein, wenn die radiale Abmessung des Durchtrittsspaltes gleich oder größer als die axiale Abmessung desjenigen Ring-Spaltes ist, welcher sich beim Verschrauben mit einem schwach oder gar nicht angesenkten anderen Teil bei Beginn des Aufwölbens oder Ausquetschens des Dichtungswerkstoffes im Bereich der Abquetsch- oder Schneidkante zwischen beiden sich noch nicht berührenden Teilen besteht.

Insgesamt ergibt sich vor allem bei Kombination einzelner oder mehrerer der vorbeschriebenen Merkmale und Maßnahmen eine Abdichtvorrichtung, bei welcher ein zu starkes Anwachsen des Druckes im Dichtungswerkstoff in der Dichtkammer beim Anziehen des Gewindes der Abdichtvorrichtung und damit eine eventuelle Verhinderung des völligen Verschließens der Dichtkammer dadurch vermieden wird, daß ab einem bestimmten Druck im Dichtungswerkstoff dieser noch über einen zweiten Weg ausweichen kann, wobei aber dieser zweite Weg, nämlich der Durchtrittsspalt zu dem Zwischenraum hin so bemessen oder so eng ist, daß der entstehende Druck dennoch zum Ausquetschen von Dichtungswerkstoff aus der Dichtkammer und zum Abscheren oder Abquetschen ausreicht, wenn das andere Teil oder Gegenstück nicht oder nur wenig angefast oder angesenkt ist. Vor allem wird erreicht, daß die Dichtkammer mit einem möglichst kleinen Drehmoment beim Anziehen des Gewindes optimal gefüllt und sicher geschlossen wird, obwohl die sich jeweils bildenden Dichtkammern - bedingt durch verschieden geformte Gewindeanfänge an dem anderen Teil oder Gegenstück - sich in Form und Volumengröße sehr stark unterscheiden können. Es wird also eine Abdichtvorrichtung geschaffen, bei der praktisch alle irgendwie angesenkten oder angefasten oder auch nicht angefasten anderen Teile mit Sicherheit langdauernd abgedichtet werden können.

Nachstehend sind Ausführungsbeispiele der Erfindung anhand der Zeichnung näher beschrieben. Es zeigt in zum Teil schematisierter Darstellung:
- Fig.1: einen Längsschnitt durch eine erfindungsgemäße Abdichtvorrichtung, bei welcher der eine Teil von einem Entlüftungsventil und der andere Teil von der Wandung eines Heizkörpers oder dergleichen Behältnisses gebildet sind und dieser andere Teil an seinem Gewindeende praktisch keine Anphasung aufweist,
- Fig.2: eine der Fig. 1 entsprechende Darstellung, bei welcher das Gewinde des anderen Teiles eine starke stirnseitige Anphasung hat,
- Fig.3: in schematisierter Darstellung eine Abdichtvorrichtung bei ihrem Zusammenschrauben bevor der Dichtring verformt wird,
- Fig.4: eine Darstellung gemäß Fig.3, bei welcher durch den Druck auf den Dichtring beim weiteren Verschrauben der beiden Teile ein Teil des Dichtungswerkstoffes aus der Dichtkammer radial nach außen verdrängt ist,
- Fig.5: eine der Fig.4 entsprechende Darstellung, bei welcher die Verdrängung von Dichtungswerkstoff nach außen durch eine weitere Anziehbewegung der zu verschraubenden Teile verstärkt ist und der Druck in der Dichtkammer so groß ist, daß Dichtungswerkstoff auch durch einen im Bodenbereich der Dichtkammer befindlichen Durchtrittsspalt zu fließen beginnt,
- Fig.6: eine den Figuren 3 bis 5 entsprechende Darstellung nach der Beendigung der Verschraubung der beiden abzudichtenden Teile, wonach der nach außen verdrängte Dichtungswerkstoff abgeschert und ein weiterer Teil des Dichtungswerkstoffes durch den Durchtrittsspalt in einen dahinter befindlichen Zwischenraum verdrängt ist,
- Fig.7: eine der Fig.3 entsprechende Darstellung, bei welcher ein Durchtrittsspalt fehlt,
- Fig.8: eine der Fig.7 entsprechende Darstellung, bei welcher durch die Zunahme des Druckes in der Dichtkammer beim Verschrauben der Widerstand nahezu unüberwindlich groß geworden ist, so daß das Gewinde überlastet wird oder das Abscheren des nach außen verdrängten Dichtungswerkstoffes unterbleibt und ein radial nach außen offener Spalt bestehenbleibt, durch welchen im Laufe der Zeit weiterer Dichtungswerkstoff unter Verminderung der Dichtwirkung wegkriechen kann,
- Fig.9: eine Darstellung gemäß Fig.3, bei welcher der Durchtrittsspalt zu einem Zwischenraum zu groß ist und
- Fig.10: die Endstellung der beiden verschraubten Teile, wobei die Dichtkammer nicht vollständig ausgefüllt und kein Dichtungswerkstoff abgeschert ist, weil dieser Dichtungswerkstoff zu leicht in den Zwischenraum unterhalb des Gewindes des anderen Teiles ausweichen kann,
- Fig.11: ein abzudichtendes Teil mit der Dichtkammer, deren Quetschkante unterhalb des Außendurchmessers ihres Gewindes angeordnet ist,
- Fig.12: das Teil gemäß Fig.11 mit eingesetzter Dichtung und aufgeschraubtem anderem Teil vor dem Festziehen und Abdichten sowie
- Fig.13: die Verschraubung der beiden Teile, wobei ein Teil des Dichtungswerkstoffes nach außen und ein anderer Teil durch den Durchtrittsspalt verdrängt werden, kurz vor dem Abquetschen des nach außen verdrängten Dichtungswerkstoffes, wobei in diesem Ausführungsbeispiel der Boden der Dichtkammer in Richtung des Gewindes schräg radial nach oben ansteigt,
- Fig.14 bis 16: eine Anordnung analog Fig.11 bis 13, wobei statt einer Quetschkante eine Schneidkante vorgesehen ist, die dabei oberhalb des Außendurchmessers des Gewindes des einen Teiles liegt,
- Fig.17 bis 19: eine der Fig.14 bis 16 entsprechende Anordnung, bei welcher die Schneidkante unterhalb des Außendurchmessers des Gewindes verläuft,
- Fig.20 und 21: einen Teillängsschnitt eines Teiles mit einem Querschnitt durch dessen Dichtkammer, wobei der Boden zum Gewinde hin konisch abfällt (Fig.20) oder konisch ansteigt (Fig.21).

Eine in allen Ausführungsbeispielen im ganzen mit 1 bezeichnete Abdichtvorrichtung weist einen axial beaufschlagten, als Profilring - im Ausführungsbeispiel als O-Ring - ausgebildeten Dichtring 2 aus nachgiebigem Dichtungswerkstoff auf. Dieser befindet sich zwischen zwei mittels Gewinde 3 verschraubbaren abzudichtenden Teilen, von denen wenigstens eines zumindest im Dichtbereich einen kreisringförmigen Querschnitt hat.

In allen Ausführungsbeispielen ist vorgesehen, daß der Dichtring 2 am Ende eines Außengewindes 3a in einer ihn teilweise umschließenden Dichtkammer 4 gehalten ist, die durch das Einschrauben und Festziehen des abzudichtenden Teiles 5 radial nach außen abgeschlossen wird. Dies geschieht dabei dadurch, daß die - in einzelnen Fällen angefaste, oder auch nicht angephaste - Stirnseite 6 des anderen Teiles 7 gegen den Dichtring 2 zur Anlage kommt und diesen durch den Anpreßdruck verformt. Dabei ist an einem der Teile, im Ausführungsbeispiel jeweils an dem einen Teil 5, eine mit dem anderen Teil 7 zusammenwirkende Abquetsch- oder Schneidkante 8 zum Abscheren von durch das Verschrauben der Teile verdrängtem überschüssigem Dichtungswerkstoff 9 vorgesehen.

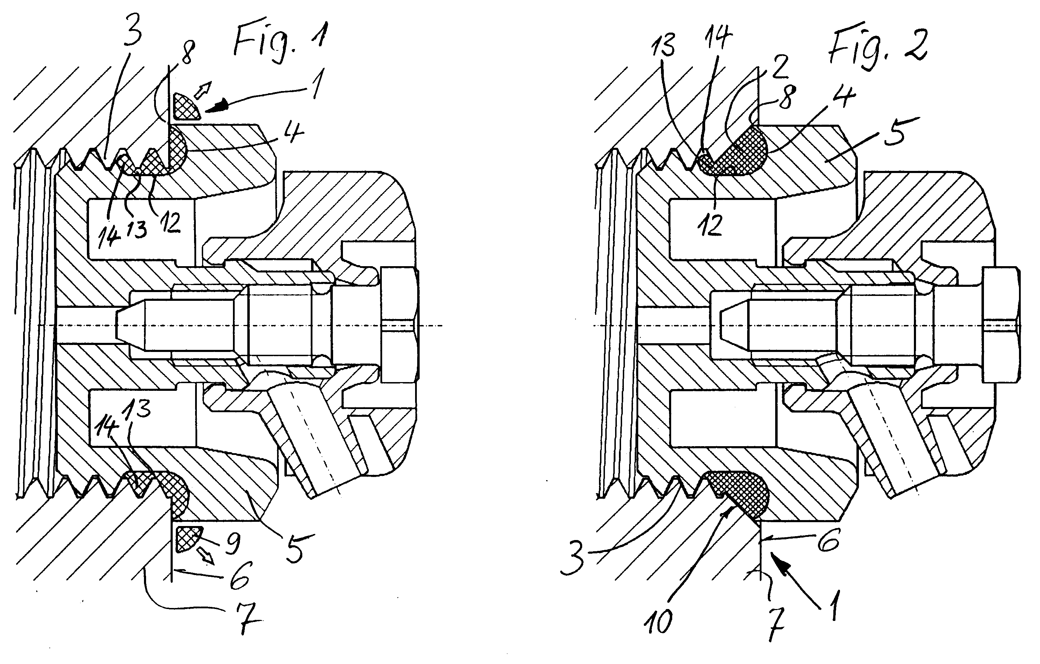

In den Figuren 1 und 2 ist das eine Teil 5 ein Entlüftungsventil und das andere Teil 7 die Wandung eines zu entlüftenden Behälters oder Heizkörpers. Fig.1 zeigt dabei an dem anderen Teil 7 ein Gewinde, welches stirnseitig praktisch nicht angefast ist, während dieses Gewinde beim Ausführungsbeispiel nach Fig.2 eine starke Anphasung 10 hat.

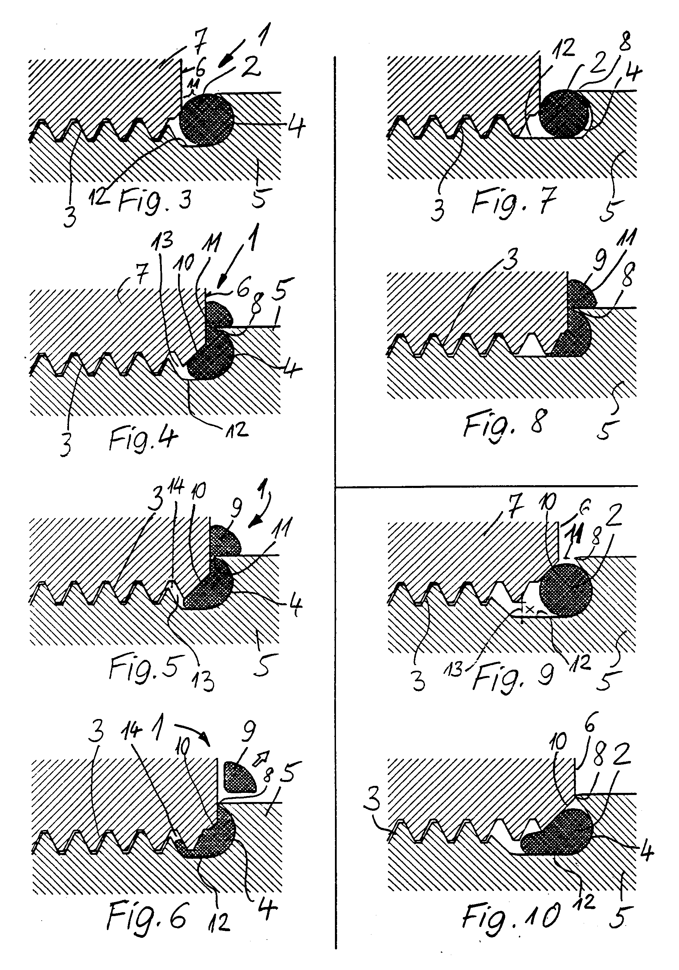

Durch das Verschrauben der abzudichtenden Teile 5 und 7 und die daraus resultierende Verformung des Werkstoffes des Dichtringes 2 wird im Laufe der Verschraubung der Widerstand immer größer, wobei gleichzeitig auch die Reibung der relativ zueinander sich drehenden Teile zunimmt. In Fig.7 und 8 ist angedeutet, daß die Verschraubung nicht zu Ende geführt werden kann, wenn einerseits der Druck und andererseits auch die Reibkraft einen zu großen Widerstand bewirken, um nach außen verdrängten Dichtungswerkstoff 9 endgültig abzuscheren, so daß zwischen der Schneidkante 8 und der Stirnseite 6 ein Spalt 11 verbleibt, durch welchen im Laufe der Zeit der unter hohem Druck stehende Dichtungswerkstoff aus der Dichtkammer 4 davonfließen kann.

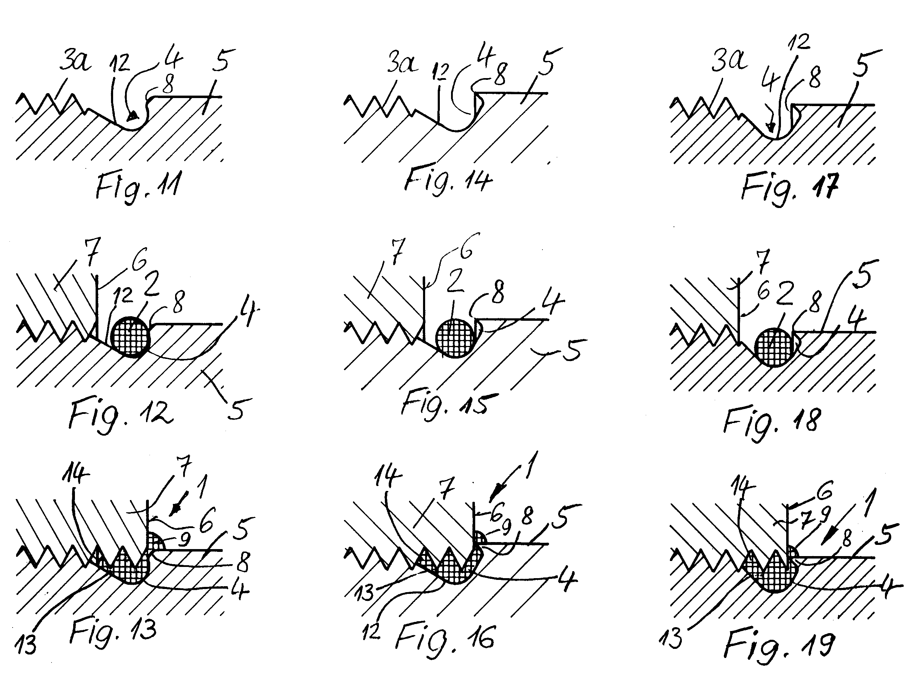

Eine andere Abdichtvorrichtung mangelhafter Art zeigen Fig.9 und 10, wo die Schneidkante 8 die Gegenfläche oder Stirnseite 6 schon erreicht hat, bevor die Dichtkammer genügend ausgefüllt ist, weil der Dichtungswerkstoff unterhalb des Gewindes des anderen Teiles 7 durch einen zu großen Zwischenraum ausweichen kann.

Es ist deshalb beim Ausführungsbeispiel gemäß Fig.1 bis 6 und auch bei den Ausführungsbeispielen gemäß Fig.11 bis 19 vorgesehen, daß die Dichtkammer 4 bis zu einem in radialer Richtung unter dem Kerndurchmesser des Gewindes 3a des sie aufweisenden einen Teiles 4 angeordneten Boden 12 und in axialer Richtung mindestens unter den ersten Gewindegang des in verschraubter Endlage befindlichen anderen Teiles 7 reicht und daß zwischen dem ersten Gewindegang des anderen Teiles 7 und dem Boden 12 der Dichtkammer 4 ein derart schmaler Durchtrittsspalt 13 für Dichtungsmasse zu einem hinter einem ersten Gewindegangstück oder Gewindegang befindlichen Zwischenraum 14 vorgesehen ist, daß der Dichtungswerkstoff durch die Andruckkraft beim Verschrauben und die dann einsetzende Quetsch- oder Schneidkraft beim endgültigen Anziehen des Gewindes etwa gleichzeitig mit dem Abscheren von aus der Dichtkammer 4 ausgetretenem überschüssigem Dichtungswerkstoff teilweise durch diesen Durchtrittsspalt 13 preßbar ist, so daß in verschraubter Position die Dichtkammer 4 und der Durchtrittsspalt 13 sowie wenigstens ein Teil des in axialer Richtung hinter dem Durchtrittsspalt 13 befindlichen Zwischenraumes 14 mit Dichtungswerkstoff ausgefüllt sind.

Im einzelnen erkennt man diese Anordnung und die sich daraus ergebende Abdichtvorrichtung 1 und auch die Wirkungsweise des Abdichtvorganges aus den Figuren 3 bis 6:
An dem einen Teil 5 ist gemäß Fig.3 der Dichtring 2 in die Dichtkammer 4 eingelegt, die sich in axialer Richtung von dem Gewinde 3 weg unterhalb der Schneidkante 8 erweitert, so daß der Dichtring 2 schon in Ausgangslage auch in radialer Richtung fixiert ist. Der andere Teil 7 ist so weit auf das Außengewinde 3a aufgeschraubt, daß seine geringfügig angephaste Stirnseite 6 gerade den Dichtring 2 berührt.

Bei einer weiteren Verschraubung wird gemäß Fig.4 durch die Annäherung der Stirnseite 6 an die Schneidkante 8 und die daraus resultierende Verkleinerung der Dichtkammer 4 der Dichtungsring 2 unter Druck gesetzt und verformt, so daß der teilweise in radialer Richtung zwischen der Stirnseite 6 und Schneidkante 8 nach außen austritt. In dieser Phase ist zwischen der Schneidkante 8 und der Stirnseite 6 der Spalt 11 gegenüber der ursprünglichen Ausgangalage gemäß Fig.3 schon stark in seiner Breite vermindert, das heißt, der Widerstand gegenüber einer weiteren Verschraubung wächst einerseits aufgrund des zunehmenden Verformungsdruckes und andererseits aufgrund der zunehmenden Reibung der nicht nur axial gegeneinander, sondern auch drehend gegeneinander bewegten Teile.

In Fig. 5 erkennt man, daß der Verschraubungsvorgang noch weiter fortgesetzt wurde, so daß nun aufgrund des noch größer gewordenen Druckes Dichtungswerkstoff auch in den Durchtrittsspalt 13 eintritt, so daß nun der Druck im Dichtungswerkstoff trotz der weiteren Annäherung der Schneidkante 8 an die Stirnseite 6 nicht mehr oder kaum noch ansteigt.

Fig.6 zeigt schließlich den Endzustand, in welchem der nach außen verdrängte überschüssige Dichtungswerkstoff 9 durch die Schneidkante 8 abgeschert ist, während ein Teil des unter Druck stehenden Dichtungswerkstoffes durch den Durchtrittsspalt 13 in den Zwischenraum 14 übergetreten ist, also ein zu starkes Anwachsen des Druckes verhindert hat, der sonst analog Fig.8 das endgültige Abscheren des Werkstoffes 9 unter Umständen unmöglich gemacht hätte.

Fig.6 entspricht somit der Anordnung, die auch in Fig.1 oder in Fig.2 erkennbar ist. Falls dabei die Anfasung einen Extremwert hat, könnte der nach außen verdrängte Werkstoff 9 in seiner Menge sehr gering sein oder sogar gegen Null gehen. Wichtig ist, daß nach der endgültigen verschraubung die Dichtkammer vollständig mit unter Druck stehendem Dichtungswerkstoff ausgefüllt ist, der aber aufgrund des sonst zu hohen Druckes auch in den Durchtrittsspalt 13 eingetreten ist.

Fig.1 macht dabei gleichzeitig noch deutlich, daß der Querschnitt der Dichtkammer 4 und des Dichtringes 2 derart aufeinander abgestimmt sind, daß bei fehlender oder geringer Anphasung 10 der Stirnseite 6 des anderen Teiles 7 die Dichtkammer 4 und wenigstens der erste Gewindegang des anderen Teiles 7 zumindest weitgehend oder vollständig mit Dichtungswerkstoff ausgefüllt sind. Die große Anfasung 10 der Fig. 2 zeigt im Vergleich dazu, daß aufgrund der großen Anfasung entsprechend weniger Gewindebereich von dem Dichtungswerkstoff ausgefüllt wird.

Die radiale Höhe oder Breite des Durchtrittsspaltes 13 zwischen dem ersten Gewindegang und dem Boden 12 der Dichtkammer 4 beträgt dabei einen Bruchteil der theoretischen Profilhöhe des Gewindes, also der radialen Ausdehnung eines Gewindeganges. Ist diese radiale Höhe des Durchtrittsspaltes 13 beispielsweise ein Sechstel der theoretischen Profilhöhe, entsteht ein entsprechend großer Widerstand an diesem Durchtrittsspalt 13, so daß sich noch ein ziemlich hoher Druck in der Dichtkammer 4 aufbaut und das Auspressen von überschüssigem Dichtungswerkstoff 9 mit großer Sicherheit erfolgt, wobei aber dem Abquetschen noch ein entsprechend großer Widerstand entgegengesetzt wird. Ist die radiale Abmessung des Durchtrittsspaltes 13 ungefähr gleich der Hälfte der theoretischen Profilhöhe oder sogar etwas größer, ist dieser Widerstand geringer, wobei aber dennoch ein genügend großer Widerstand entsteht, um auch Dichtungswerkstoff 9 nach außen austreten zu lassen, der dann um so müheloser abgeschert werden kann.

Die axiale Erstreckung der Dichtkammer 4 in Gewinderichtung von einer durch ihre Schneidkante 8 verlaufenden radialen Ebene aus entspricht wenigstens etwa einer Gewindesteigung, könnte aber erforderlichenfalls auch noch etwas größer sein.

Bezüglich der radialen Abmessung des Durchtrittsspaltes 13 ist anhand der Figuren 4 und 5 noch erkennbar, daß diese geringer als die axiale Abmessung desjenigen Spaltes 11 zwischen Abquetsch- oder Schneidkante 8 und Gegenfläche 6 sein kann, wenn an einem nicht oder wenig angephasten Teil 7 bei Festziehen das Aufwölben und Ausquetschen eines Teiles 9 des Dichtungswerkstoffes im Bereich der Schneid- und Abquetschkante beginnt. Dabei hat dieses Aufwölben und Ausquetschen bei der Position gemäß Fig.4 schon längst begonnen und in Fig.4 ist auch der Spalt 11 inzwischen etwa gleich oder sogar schon kleiner als der Durchtrittsspalt 13.

Die Abquetsch- oder Schneidkante 8, die Größe der Dichtkammer 4 und die radiale Ausdehnung des Durchtrittsspaltes 13 sind so abgestimmt, daß beim Festziehen des abzudichtenden Teiles und dem daraus resultierenden Einschließen von Dichtungswerkstoff in der Abdichtkammer 4 die Zunahme des Druckes innerhalb des Dichtungswerkstoffes der durch das Verdrängen des Dichtungswerkstoffes durch den Durchtrittsspalt 13 bewirkten Druckabnahme etwa gleich ist. Es wird also mit anderen Worten dafür gesorgt, daß ab einem bestimmten, für ein Ausquetschen von Dichtungswerkstoff 9 nach außen und Abscheren genügenden Innendruck in der Dichtkammer dieser nicht mehr ansteigt, weil dann durch den entsprechend bemessenen Durchtrittsspalt 13 weiterer Dichtungswerkstoff ausweichen kann.

In den Figuren 11 bis 13 ist ein Ausführungsbeispiel dargestellt, bei welchem der eine Teil 5 eine Quetschkante 8 hat, die unterhalb des Außendurchmessers des Gewindes 3a angeordnet ist. Anhand der Fig.13 erkennt man, daß auch dabei durch die erfindungsgemäße Anordnung Dichtungswerkstoff einerseits innerhalb der Dichtkammer 4 unter Druck gesetzt und andererseits nach außen verdrängt wird, wobei Fig.13 die Phase kurz vor dem Abquetschen dieses verdrängten Dichtungswerkstoffes 9 zeigt, der außerdem durch einen Durchtrittsspalt 13 in den Zwischenraum 14 ausgewichen ist. Der Boden 12 steigt dabei schräg zu dem Gewinde 3a hin an.

Das Ausführungsbeispiel gemäß Fig.14 bis 16 ähnelt dem gemäß Fig.11 bis 13, jedoch ist eine Schneidkante 8 vorgesehen, die über dem Außendurchmesser des Gewindes 3a liegt.

Bei dem Ausführungsbeispiel gemäß Fig.17 bis 19 befindet sich hingegen die Schneidkante 8 unterhalb des Außendurchmessers des Gewindes 3a. In all diesen Fällen ergibt sich jedoch immer wieder die erfindungsgemäße Anordnung, bei welcher der Werkstoff des Dichtringes 2 in der Dichtkammer 4 unter einem solchen Druck steht und eingekammert ist, daß ein Teil nach außen verdrängt und abgeschert und ein anderer Teil durch den Durchtrittsspalt 13 verdrängt wurde. Je nach Größe der Anfasung 10 kann dabei mehr oder weniger Werkstoff durch den Durchtrittsspalt 13 verdrängt werden, so daß die Abdichtvorrichtung 1 den Vorteil hat, für unterschiedlich angefaste Teile 7 gleichermaßen brauchbar zu sein.

Fig.2 zeigt dabei noch eine durch die Erfindung ermöglichte Besonderheit. Die Anfasung 10 ist in diesem Ausführungsbeispiel derart groß, daß die Abquetsch- oder Schneidkante 8 auf die schräge Fläche dieser Anfasung 10 trifft. Daraus ergibt sich, daß die gesamte Dichtkammer in Gebrauchsstellung ein gleichbleibendes Volumen hat, selbst wenn die Anfasung 10 noch größer gemacht würde. In diesem Falle kann also für noch größere Anfasungen jeweils von gleichen Verhältnissen ausgegangen werden. Somit könnte das Volumen des Dichtringes auf eine solche Dichtkammergröße berechnet oder abgestimmt werden, so daß praktisch kein Dichtungswerkstoff mehr nach außen verdrängt und abgeschert werden muß, im Falle einer kleineren Anfasung des anderen Teiles 7 und seines Gewindeauslaufes jedoch die Ausquetschung von Dichtungswerkstoff 9 nach außen stattfindet und auch dabei ein zu starker Innendruck vermieden wird. In diesem Falle, in dem die Dichtung 2 auf ein derartiges Kammervolumen gemäß Fig.2 abgestimmt ist, dient die Abquetsch- oder Schneidkante 8 jedoch nach wie vor zum völligen Abschließen der Dichtkammer 4 nach außen.

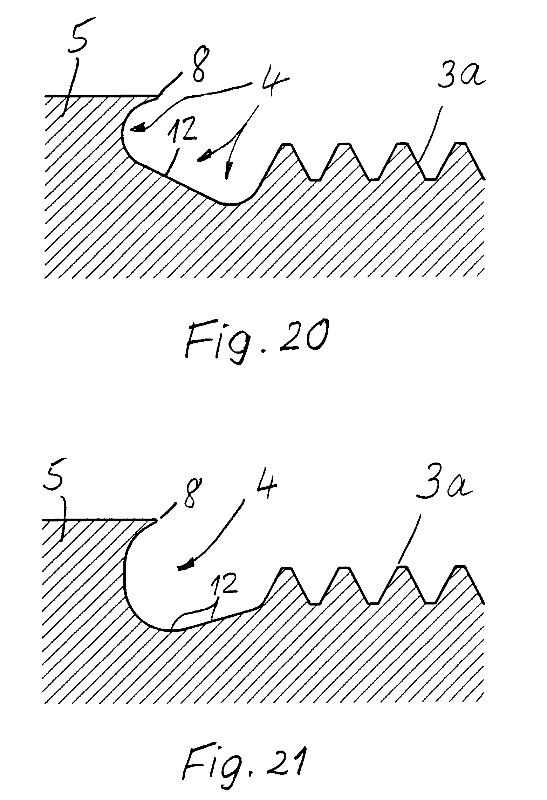

In den Figuren 20 und 21 ist noch einmal verdeutlicht, daß der Boden 12 der Dichtkammer 4 in axialer Richtung - insbesondere konisch - ansteigend (Fig.21) oder abfallend (Fig.20) verlaufen kann.

Die Abdichtvorrichtung 1 hat an einem abzudichtenden Teil 5 eine Dichtkammer 4, die den Dichtring 2 aufnimmt und an ihrer dem Gewinde 3a abgewandten Seite von einer Quetsch- oder Schneidkante 8 begrenzt wird, so daß beim Festziehen des Gewindes 3 der beiden abzudichtenden Teile 5 und 7 durch den zunehmenden Druck in der Dichtkammer 4 verdrängter Dichtungswerkstoff 9 an der Dichtkante 8 radial nach außen austritt und abgeschert wird, also die Dichtkammer vollständig ausgefüllt und der Dichtungswerkstoff unter Druck gesetzt werden. Damit bei diesem Vorgang der Widerstand zum Anziehen des Gewindes 3 zwischen den beiden abzudichtenden Teilen 5 und 7 nicht zu groß wird und unter Umständen zwischen der Schneidkante 8 und der Gegenfläche oder Stirnseite des anderen Teiles 7 nicht noch ein Spalt 11 verbleibt, durch welchen im Laufe der Jahre der unter Druck in der Dichtkammer 4 befindliche Werkstoff herauskriechen könnte, reicht die Dichtkammer 4 bis zu einem in radialer Richtung unter dem Kerndurchmesser des Gewindes 3a des sie aufweisenden einen Teiles 5 angeordneten Boden 12 und in axialer Richtung mindestens unter den ersten Gewindegang des in verschraubter Endlage befindlichen anderen Teiles 7 und zwischen dem ersten Gewindegang des anderen Teiles 7 und dem Boden 12 der Dichtkammer 4 ist ein derart schmaler Durchtrittsspalt 13 für Dichtungsmasse zu einem in axialer Richtung dahinter befindlichen Zwischenraum 14 vorgesehen, daß der Dichtungswerkstoff bei einem übermäßigen Ansteigen des Druckes in der Dichtkammer 4 durch diesen Durchtrittsspalt 13 ausweicht, so daß das Abscheren von radial durch den Spalt 11 nach außen verdrängtem Dichtungswerkstoff 9 mit einer vertretbaren Kraft beziehungsweise einem vertretbaren Anzugsmoment zu Ende geführt und der Spalt 11 völlig geschlossen werden kann. Der Durchtrittsspalt 13 ist dabei andererseits so schmal, daß er nur unter dieser starken Belastung des Abscherens oder Abquetschens Dichtungswerkstoff durchläßt und der Zwischenraum 14 ist so gering, daß er bei diesem Vorgang ebenfalls sehr weitgehend oder vollständig gefüllt wird.

## Patentansprüche

1. Abdichtvorrichtung (1) mit einem axial beaufschlagten, als Profilring - insbesondere O-Ring - ausgebildeten Dichtring (2) aus nachgiebigem Werkstoff, zwischen zwei mittels Gewinde (3) verschraubbaren abzudichtenden Teilen, von denen wenigstens ein Teil zumindest im Dichtbereich einen kreisringförmigen Querschnitt hat, wobei der Dichtring (2) am Ende eines Außengewindes (3a) in einer ihn zumindest teilweise umschließenden Dichtkammer (4) gehalten ist, die durch das Einschrauben und Festziehen des abzudichtenden Teiles (5) radial nach außen abgeschlossen wird, wobei die - gegebenenfalls angefaste - Stirnseite (6) des anderen Teiles (7) gegen den Dichtring (2) zur Anlage kommt und diesen durch den Anpreßdruck verformt und wobei an einem der Teile (6) eine mit dem anderen Teil (6) zusammenwirkende Abquetsch- oder Schneidkante (8) vorgesehen ist, wobei die Dichtkammer (4) bis zu einem in radialer Richtung nahe unter dem Kerndurchmesser des Gewindes (3a) des sie aufweisenden einen Teiles (5) angeordneten Boden (12) reicht, **dadurch gekennzeichnet,** daß die Dichtkammer (4) im Schnitt gesehen im wesentlichen C- oder J-förmig ist und in axialer Richtung mindestens unter den Anfang des Gewindeprofiles des in verschraubter Endlage befindlichen anderen Teiles reicht und daß zwischen dem Anfang des Gewindeprofiles des anderen Teiles (7) und dem Boden (12) der Dichtkammer (4) ein derart schmal bemessener Durchtrittsspalt (13) für Dichtungswerkstoff zu einem hinter dem Anfang des Gewindeprofiles befindlichen Zwischenraum (14) vorgesehen ist, daß der Dichtungswerkstoff beim Erreichen oder Überschreiten einer vorbestimmten Andruckkraft beim Verschrauben und/oder beim Erreichen oder Überschreiten der Quetsch- oder Schneidkraft beim Anziehen des Gewindes zum Verhindern oder Abbau der überschüssigen Kraft oder des überhöhten Druckes teilweise durch diesen Durchtrittsspalt (13) preßbar ist.

2. Abdichtvorrichtung nach Anspruch 1, dadurch gekennzeichnet, daß in verschraubter Position mit einem gering oder nicht angefasten anderen Teil oder Gegenstück die gesamte Dichtkammer (4) und der Durchtrittsspalt (13) sowie wenigstens ein Teil des in axialer Richtung hinter dem Durchtrittsspalt (13) befindlichen Zwischenraumes (14) oder Gewinderaumes mit Dichtungswerkstoff ausgefüllt sind.

3. Abdichtvorrichtung nach Anspruch 1 oder 2, dadurch gekennzeichnet, daß der Querschnitt der Dichtkammer (4) und des Dichtringes (2) derart aufeinander abgestimmt sind, daß bei starker oder zu großer Anfasung (16) oder Ansenkung der Stirnseite (6) des Innengewindes an dem anderen Teil (7) die Dichtkammer (4) zumindest weitgehend oder vollständig mit Dichtungswerkstoff ausgefüllt ist.

4. Abdichtvorrichtung nach einem der Ansprüche 1 bis 3, dadurch gekennzeichnet, daß die radiale Höhe des Durchtrittsspaltes (13) zwischen dem Anfang des Gewindeprofiles oder dem ersten Gewindegang und dem Boden (12) der Dichtkammer (4) einen Bruchteil der theoretischen Profilhöhe des Gewindes beträgt.

5. Abdichtvorrichtung nach einem der Ansprüche 1 bis 4, dadurch gekennzeichnet, daß die Differenz zwischen dem Kerndurchmesser des Innengewindes am anderen Teil oder Gegenstück und dem Bodendurchmesser der Dichtkammer zumindest am Durchtrittsspalt (13) wenigstens ein Sechstel, ein Fünftel oder mehr, zum Beispiel ein Viertel, ein Drittel, die Hälfte oder noch mehr gegebenenfalls das Ein- oder Eineinhalbfache der Höhe des Gewindeprofiles (3) beträgt.

6. Abdichtvorrichtung nach einem der Ansprüche 1 bis 5, dadurch gekennzeichnet, daß die axiale Erstreckung der Dichtkammer (4) in Gewinderichtung von einer durch ihre Abquetsch- oder Schneidkante (8) verlaufenden radialen oder Querschnitts-Ebene aus wenigstens etwa einer Gewindesteigung entspricht.

7. Abdichtvorrichtung nach einem der Ansprüche 1 bis 6, dadurch gekennzeichnet, daß der Boden (12) der Dichtkammer (4) in axialer Richtung - insbesondere konisch - ansteigend oder abfallend verläuft.

8. Abdichtvorrichtung nach einem der vorstehenden Ansprüche, dadurch gekennzeichnet, daß die Abquetsch- oder Schneidkante (8), die Größe der Dichtkammer (4) und die radiale Ausdehnung des Durchtrittsspaltes (13) unterhalb des Gewindes des anderen Teiles zum Volumen der Dichtung so abgestimmt sind, daß beim Festziehen des abzudichtenden Teiles und dem daraus resultierenden Einschließen von Dichtungswerkstoff in der Dichtkammer (4) die Zunahme des Druckes innerhalb des Dichtungswerkstoffes der durch das Verdrängen des Dichtungswerkstoffes durch den Durchtrittsspalt (13) bewirkten Druckabnahme etwa gleich ist.

9. Abdichtvorrichtung nach einem der Ansprüche 1 bis 8, dadurch gekennzeichnet, daß die radiale Abmessung des Durchtrittsspaltes (13) zwischen dem Boden (12) der Dichtkammer und dem Kerndurchmesser des Gewindes am anderen Teil (7) gleich oder geringer als die axiale Abmessung desjenigen Spaltes (11) zwischen Abquetsch- oder Schneidkante (8) und Gegenfläche oder Stirnseite (6) ist, der an einem nicht oder wenig angefasten Teil (7) beim Verschrauben bei Beginn des Aufwölbens und Ausquetschens eines Teiles (9) des Dichtungswerkstoffes im Bereich der Abquetsch- oder Schneidkante (8) zwischen beiden sich noch nicht berührenden Teilen besteht.

10. Abdichtvorrichtung nach einem der Ansprüche 1 bis 9, dadurch gekennzeichnet, daß die radiale Abmessung des Durchtrittsspaltes gleich oder größer als die axiale Abmessung desjenigen Ring-Spaltes (11) ist, welcher sich beim Verschrauben mit einem schwach oder gar nicht angesenkten anderen Teil (7) bei Beginn des Aufwölbens und Ausquetschens des Dichtungswerkstoffes im Bereich der Abquetsch- oder Schneidkante (8) zwischen beiden sich noch nicht berührenden Teilen besteht.

## Claims

1. A sealing device (1) with a sealing ring (2) in the form of a shaped ring - particularly an O-ring - made of flexible material, wherein said ring is acted upon axially and is situated between two parts which are adapted to be screwed together by means of thread (3) and are to be sealed, at least one of said parts having a circular ring-shaped cross section at least in the sealing area, wherein the sealing ring (2) is held at the end of an external thread (3a) in, and is at least partly surrounded by, a sealing chamber (4) closed radially outwardly by screwing in and tightening the part (5) to be sealed, wherein the - possibly chamfered - end face (6) of the other part (7) comes to bear against and deforms the sealing ring (2) by the contact pressure, and wherein one of the parts (6) is provided with a pinching off or cutting edge (8) co-operating with the other part (6), wherein the sealing chamber (4) extends to a base (12) arranged in a radial direction shortly beneath the minor diameter of the thread (3a) of the one part (5) having said chamber, **characterized in that** the sealing chamber (4) is substantially C-shaped or J-shaped viewed in section and extends in an axial direction at least under the beginning of the thread profile of the other part situated in the screwed home position and that between the beginning of the thread profile of the other part (7) and the base (12) of the sealing chamber (4) a passage (13) is provided for sealing material to pass to an interspace (14) situated behind the beginning of the thread profile, said passage (13) being dimensioned to be so narrow that, when a predetermined pressure force is reached or exceeded as the parts are screwed together and/or when the pinching off or cutting force is reached or exceeded as the thread is tightened, part of the sealing material is pressable through said gap (13) to prevent or relieve the excess force or excessive pressure.

2. A sealing device as claimed in claim 1, characterized in that in the position in which one part is screwed together with an other part or companion member having a slight chamfer or no chamfer, the entire sealing chamber (4) and the passage (13) as well as at least a portion of the interspace (14) or thread space situated behind the passage (13) in an axial direction are filled with sealing material.

3. A sealing device as claimed in claim 1 or claim 2, characterized in that the cross section of the sealing chamber (4) and the cross section of the sealing ring (2) are coordinated in such a way that, in case of the end face (6) of the internal thread on the other part (7) having a pronounced chamfer or too large a chamfer (15) or spot facing, the sealing chamber (4) is at least largely or fully filled with sealing material.

4. A sealing device as claimed in any one of claims 1 to 3, characterized in that the radial height of the passage (13) between the beginning of the thread profile or first turn and the base (12) of the sealing chamber (4) is a fraction of the theoretic profile height of the thread.

5. A sealing device as claimed in any one of claims 1 to 4, characterized in that the difference between the minor diameter of the internal thread on the other part or companion member and the base diameter of the sealing chamber at least at the passage (13) is at least a sixth, a fifth or more, for example a quarter, a third, half or even more, possibly one or one and a half times the height of the thread profile (3).

6. A sealing device as claimed in any one of claims 1 to 5, characterized in that the axial expanse of the sealing chamber (4) in the direction of the thread, from a radial or cross-sectional plane running through the pinching off or cutting edge (8) of said chamber, corresponds to at least approximately one thread lead.

7. A sealing device as claimed in any one of claims 1 to 6, characterized in that the base (12) of the sealing chamber (4) shows a development sloping - particularly conically - downwards or upwards in the axial direction.

8. A sealing device as claimed in any one of the preceding claims, characterized in that the pinching off or cutting edge (8), the size of the sealing chamber (4) and the radial extent of the passage (13) beneath the thread of the other part are coordinated to the volume of the seal in such a way that, as the part to be sealed is tightened and sealing material is resultantly enclosed in the sealing chamber (4), the increase in pressure within the sealing material is approximately equal to the drop in pressure brought about by the displacement of the sealing material through the passage (13).

9. A sealing device as claimed in any one of claims 1 to 8, characterized in that the radial dimension of the passage (13) formed between the base (12) of the sealing chamber and the minor diameter of the thread on the other part (7) is equal to or smaller than the axial dimension of the gap (11) formed between pinching off or cutting edge (8) and companion face or end face (6), said gap (11) existing at a part (7) which has no chamfer or a slight chamfer and being in the region of the pinching off or cutting edge (8) and between the two not yet contacting parts when, as the parts are screwed together, a portion (9) of the sealing material begins to bulge and squeeze out.

10. A sealing device as claimed in any one of claims 1 to 9, characterized in that the radial dimension of the passage is equal to or larger than the axial dimension of the annular gap (11) which exists in the region of the pinching off or cutting edge (8) and between the two not yet contacting parts when, as one part is screwed together with another part (7) having a slight chamfer or no spot facing at all, the sealing material begins to bulge and squeeze out.

## Revendications

1. Dispositif d'étanchéification (1) avec une bague d'étanchéité (2) sollicitée axialement, réalisée sous forme de bague profilée - en particulier de bague torique - en un matériau déformable, disposée entre deux parties a isoler de façon étanche, pouvant être vissées au moyen d'un filetage (3), dont au moins une partie a une section transversale en forme d'anneau de cercle au moins dans la zone d'étanchéité, la bague d'étanchéité (2) étant maintenue à l'extrémité d'un filetage extérieur (3a) dans une chambre d'étanchéité (4) l'enclosant au moins partiellement, fermée radialement vers l'extérieur par le vissage et le blocage par serrage de la partie (5) à isoler de façon étanche, la face frontale (6) - le cas échéant chanfreinée - de l'autre partie (7) venant en appui contre la bague d'étanchéité (2) et déformant celle-ci du fait de la pression de pressage, et sur l'une des parties (7) étant prévue une arête d'écrasement ou de découpage (8) coopérant avec l'autre partie (6), la chambre d'étanchéité (4) arrivant jusqu'à un fond (12) disposé en direction radiale à proximité sous le diamètre de noyau du filetage (3a) de celle des parties (5) qui la comporte, caractérisé en ce que la chambre d'étanchéité (4) a, en coupe, une forme sensiblement en C ou en J et arrive en direction axiale au moins sous l'amorce du profil fileté de l'autre partie se trouvant dans la position finale vissée et en ce qu'entre l'amorce du profil fileté de l'autre partie (7) et le fond (12) de la chambre d'étanchéité (4) est prévu un interstice de passage (13), pour un matériau d'étanchéité, allant à un espace intermédiaire (14), se trouvant derrière l'amorce du profile fileté et d'une étroitesse de dimension faisant que le matériau d'étanchéité, lorsque est atteinte ou dépassée une force de pressage prédéterminée lors de vissage et/ou lors de l'atteinte ou du dépassement de la force d'écrasement ou du découpage, peut être pressé partiellement à travers cet interstice de passage (13) lors du serrage du filetage pour empêcher ou faire cesser la force excessive ou bien la pression excessive.

2. Dispositif d'étanchéification selon la revendication 1, caractérisé en ce que, dans la position vissée, avec une autre partie ou contre-pièce faiblement chanfreinée ou non chanfreinée, l'ensemble de la chambre d'étanchéité (4) et l'interstice de passage (13), ainsi qu'au moins une partie de l'espace intermédiaire (14) ou l'espace fileté se trouvant, en direction axiale, derrière l'interstice de passage (13), sont remplis au moins notablement ou complètement du matériau d'étanchéité.

3. Dispositif d'étanchéification selon la revendication 1 ou 2, caractérisé en ce que les sections transversale de la chambre d'étanchéité (4) et de la bague d'étanchéité (2) sont adaptées l'une par rapport à l'autre, de manière que, lorsque l'on a un chanfrein grand ou trop grand ou bien un creusement de la face frontale (4) du taraudage sur l'autre partie (7), la chambre d'étanchéité (6) est remplie au moins largement ou complètement avec le matériau d'étanchéité.

4. Dispositif d'étanchéification selon l'une des revendications 1 à 3, caractérisé en ce que la hauteur radiale de l'interstice de passage (13), entre l'amorce du profil fileté ou le premier pas de vis et le fond (12) de la chambre d'étanchéité (4), est une fraction de la hauteur de profil théorique du filetage.

5. Dispositif d'étanchéification selon l'une des revendications 1 à 4, caractérisé en ce que la différence entre le diamètre du noyau du taraudage sur l'autre partie ou la pièce conjuguée et le diamètre de fond de la chambre d'étanchéité au moins sur l'interstice de passage (13) est au moins d'un sixième, un cinquième ou plus, par exemple un quart, un tiers, la moitié, ou encore plus, le cas échéant de la même valeur, ou d'une fois et demi la hauteur du profil fileté (3).

6. Dispositif d'étanchéification selon l'une des revendications 1 à 5, caractérisé en ce que l'étendue axial de la chambre d'étanchéité (4) dans la direction du filetage correspond à peu près à un pas du filetage, lorsque l'on part d'un plan radial ou de coupe transversale passant par son arête d'écrasement ou de découpage (8).

7. Dispositif d'étanchéification selon l'une des revendications 1 à 6, caractérisé en ce que le fond (12) de la chambre d'étanchéité (4) s'étend en montant ou en descendant - en particulier avec une allure conique lorsque l'on observe en direction axiale.

8. Dispositif d'étanchéification selon l'une des revendications précédentes, caractérisé en ce que l'arête d'écrasement ou de découpage (8), la taille de la chambre d'étanchéité (4) et l'étendue radiale de l'interstice de passage (13) au-dessous du filetage de l'autre partie par rapport au volume du joint d'étanchéité sont telles que, lors du blocage par serrage de la partie à étanchéifier et de l'enfermement résultant du matériau d'étanchéité dans la chambre d'étanchéité (4), l'augmentation de pression à l'intérieur du matériau d'étanchéité est à peu près égale à la diminution de pression provoquée par le refoulement du matériau d'étanchéité à travers l'interstice de passage (13).

9. Dispositif d'étanchéification selon l'une des revendications 1 à 8, caractérisé en ce que la dimension radiale de l'interstice de passage (13) entre le fond (12) de la chambre d'étanchéité et le diamètre de noyau du filetage sur l'autre partie (7) est égale ou inférieure à la dimension axiale de l'interstice (11) correspondant, entre arête d'écrasement ou de découpage (8) et la face conjuguée ou la face frontale (6), qui se constitue sur une partie non chanfreinée ou peu chanfreinée (7), lors du vissage, au début du bombement ou de l'écrasement d'une partie (9) du matériau d'étanchéité se constituant dans la zone de l'arête d'écrasement ou de découpage (8) entre les deux parties non encore en contact.

10. Dispositif d'étanchéification selon l'une des revendications 1 à 9, caractérisé en ce que la dimension radiale de l'interstice de passage est égale ou supérieure à la dimension axiale de l'interstice annulaire (11) qui se constitue lors du vissage avec une partie (7) faiblement ou même non chanfreinée, au début du bombement et de l'écrasement du matériau d'étanchéité, dans la zone de l'arête d'écrasement ou de découpage (8), entre les deux parties non encore en contact.
